(19) Europäisches Patentamt
European Patent Office
Office européen des brevets

(11) EP 1 288 864 A2

(12) **EUROPEAN PATENT APPLICATION**

(43) Date of publication:
**05.03.2003 Bulletin 2003/10**

(51) Int Cl.[7]: **G06T 11/60**

(21) Application number: **02019787.7**

(22) Date of filing: **04.09.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **04.09.2001 JP 2001266963**

(71) Applicant: **MATSUSHITA ELECTRIC INDUSTRIAL CO., LTD.**
**Kadoma-shi, Osaka 571-8501 (JP)**

(72) Inventor: **Mekata, Tsuyoshi**
**Katano-shi, Osaka 576-0052 (JP)**

(74) Representative: **Grünecker, Kinkeldey, Stockmair & Schwanhäusser Anwaltssozietät**
**Maximilianstrasse 58**
**80538 München (DE)**

(54) **Image processing apparatus, image processing method, and image processing program**

(57) The present invention provides an image processing technique for cutting out a portion of an original image so that the cut-out image includes an object therein and the object is displayed in a well-balanced manner irrespective of whether the object occupies a small area or a large area in the original image. A candidate region of the object is extracted from a given original image. A cut-out region is set based on the candidate region so as to cut out an image of the object from the original image. In this process, the reference for setting the position of the cut-out region is switched from one to another depending on the size that is occupied by the candidate region in the original image.

FIG. 1

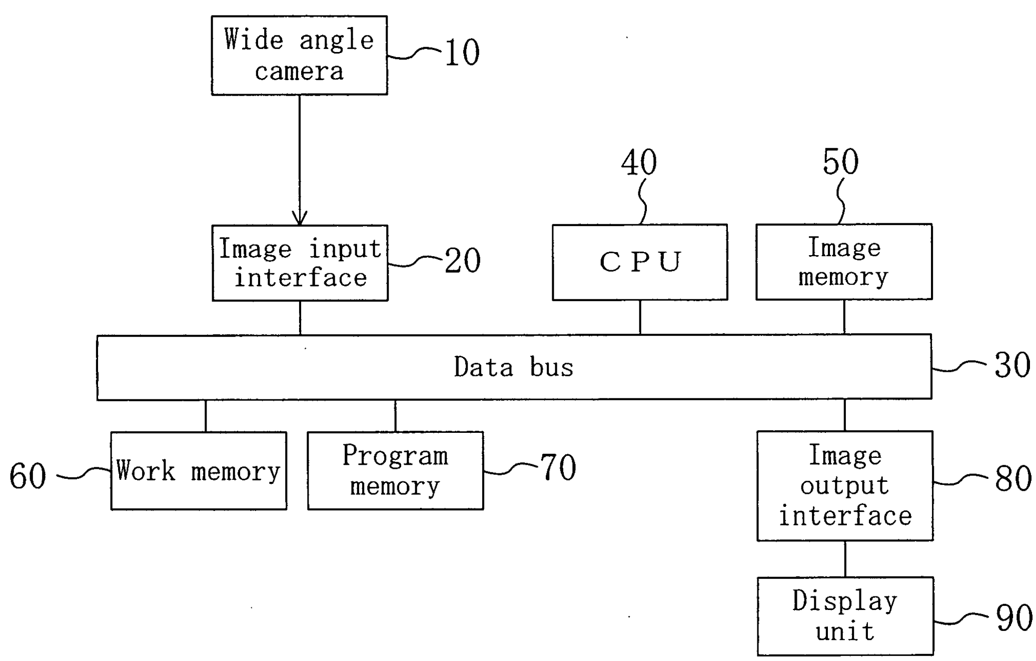




Printed by Jouve, 75001 PARIS (FR)

## Description

## BACKGROUND OF THE INVENTION

The present invention relates to an image processing technique for cutting out a portion of an original image so that the cut-out image includes an object therein.

FIG. **16** illustrates a conventional procedure for cutting out an object image. Referring to FIG. **16**, an original image is read in a CIF format in step S51, and an object region is extracted by using a background subtraction method in step S52. Then, in step S53, the presence/absence of an object region is determined. If an object region is present in the current frame, the center of the circumscribed rectangle of the object region is obtained in step S54. Then, in step S55, a cut-out region of a number of pixels for QCIF is set so that the center thereof is aligned with the center of the circumscribed rectangle of the object region, which has been obtained in step S54. Then, an image in the cut-out region is cut out from the original image in step S56, and the cut-out image is displayed in step S57. The positional information of the set cut-out region is stored in a cut-out region information DB **110**.

On the other hand, when it is determined in step S53 that an object region is not present in the current frame, the positional information of the cut-out region of the previous frame is read out from the cut-out region information DB **110**, and the image cut-out operation is performed.

PROBLEMS TO BE SOLVED BY THE INVENTION

With the conventional method for cutting out an object image, the position of the cut-out region is set relative to the center of the circumscribed rectangle of a candidate region of the object. With this method, if a candidate region **CA1** of the object is sufficiently smaller than a cut-out region **Z1**, as illustrated in FIG. **17A**, it is possible to obtain a cut-out image with the object being centered therein, as illustrated in FIG. **17B**.

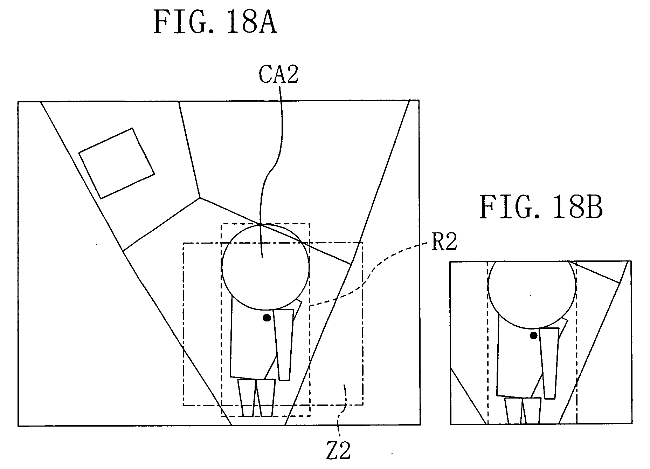

With this method, however, if a candidate region **CA2** of the object is so large that it extends beyond a cut-out region **Z2,** as illustrated in FIG. **18A**, a portion of the head of the object person is cut off, as illustrated in FIG. **18B,** thereby resulting in a cut-out image that is very hard to view.

If the cut-out region is set so that the center thereof is slightly shifted upward from the center of the circumscribed rectangle, it is possible to prevent the head of the object person from being partially cut off in the example illustrated in FIG. **18A** and FIG. **18B.** If such a method is used with the example illustrated in FIG. **17A** and FIG. **17B**, however, some space will be wasted in the cut-out image of the object, thereby making it more difficult to grasp the scene surrounding the object.

## SUMMARY OF THE INVENTION

An object of the present invention is to provide an image processing technique for cutting out a portion of an original image so that the cut-out image includes an object therein and the object is displayed in a well-balanced manner irrespective of whether the object occupies a small area or a large area in the original image.

Specifically, an image processing apparatus of the present invention includes: means for extracting a candidate region of an object from a given original image; and means for setting a cut-out region based on the candidate region so as to cut out an image of the object from the original image, wherein the cut-out region setting means is configured so that a reference for setting a position of the cut-out region can be switched depending on circumstances.

With the image processing apparatus of the present invention, the reference for setting the position of the cut-out region for cutting out the image of the object from the original image can be switched depending on circumstances. Therefore, it is possible to cut out an image in which the object is displayed in a well-balanced manner, irrespective of whether the object occupies a large area or a small area in the image, for example.

It is preferred that the cut-out region setting means of the image processing apparatus of the present invention switches the reference based on a characteristic of the candidate region.

It is preferred that the cut-out region setting means uses, as the characteristic of the candidate region, a size that the candidate region occupies in the original image.

It is preferred that the cut-out region setting means sets the cut-out region so that the candidate region is substantially centered in the cut-out region when the candidate region is smaller than the cut-out region, whereas a specified portion of the candidate region is included in the cut-out region when the candidate region is larger than the cut-out region. It is preferred that: the object is a person or an animal; and the specified portion is a face or a head of the object. It is preferred that the specified portion is an upper edge portion of the candidate region.

It is preferred that the cut-out region setting means uses, as the characteristic of the candidate region, a position of the candidate region in the original image.

It is preferred that the cut-out region setting means uses, as the characteristic of the candidate region, a direction in which the candidate region is moving.

It is preferred that the cut-out region setting means of the image processing apparatus of the present invention switches the reference based on a distance between a camera having captured the original image and the object.

It is preferred that when a plurality of candidate regions are detected, the cut-out region setting means of the image processing apparatus of the present invention sets the cut-out region based on one of the candidate regions having the largest area.

It is preferred that the image processing apparatus of the present invention further includes means for smoothing the cut-out region in a time direction of the original image.

Another image processing apparatus of the present invention includes: means for extracting a candidate region of an object from a given original image; means for setting a cut-out region based on the candidate region so as to cut out an image of the object from the original image; and means for smoothing the cut-out region in a time direction of the original image.

With the image processing apparatus of the present invention, the cut-out region is smoothed in the time direction. Therefore, even if the detected candidate region somewhat jolts from frame to frame, the cut-out region moves smoothly and it is possible to obtain a cut-out image that is easy to view.

It is preferred that the image processing apparatus of the present invention further includes means for delaying the original image so as to compensate for a delay of movement of the cut-out region due to the smoothing operation.

It is preferred that the smoothing means of the image processing apparatus of the present invention changes a time constant used in the smoothing operation based on whether a size of the cut-out region is increasing or decreasing.

It is preferred that the smoothing means of the image processing apparatus of the present invention changes a time constant used in the smoothing operation based on a direction in which the cut-out region is moving.

It is preferred that the cut-out region setting means of the image processing apparatus of the present invention is configured so that a condition for setting the cut-out region can be switched based on a direction in which the candidate region is moving. It is preferred that the cut-out region setting means sets the cut-out region with a margin above the candidate region when the candidate region is moving upward.

Still another image processing apparatus of the present invention includes: means for extracting a candidate region of an object from a given original image; and means for setting a cut-out region based on the candidate region so as to cut out an image of the object from the original image, wherein when a plurality of candidate regions are detected, the cut-out region setting means sets the cut-out region based on one of the candidate regions having the largest area.

With the image processing apparatus of the present invention, even if a plurality of candidate regions are detected, only one candidate region having the largest area is used for setting the cut-out region, whereby the object can be tracked stably.

Still another image processing apparatus of the present invention includes: means for extracting a candidate region of an object from a given original image; means for setting a cut-out region based on the candidate region so as to cut out an image of the object from the original image; and a parameter set DB for storing a plurality of parameter sets used for setting the cut-out region, wherein the cut-out region setting means sets the cut-out region by using selected one of the plurality of parameter sets stored in the parameter set DB.

It is preferred that the image processing apparatus of the present invention further includes means for selecting one of the parameter sets according to a selection signal received from the outside of the image processing apparatus.

It is preferred that the image processing apparatus of the present invention further includes means for selecting one of the parameter sets based on at least one of a type of a camera capturing the original image and a size of the candidate region.

Still another image processing apparatus of the present invention includes: means for extracting a candidate region of an object from a given original image; means for generating a plurality of cut-out images for a plurality of candidate regions, respectively, when the plurality of candidate regions are detected, and for outputting an image listing the plurality of cut-out images; means for receiving a selection signal for selecting one of the plurality of cut-out images; and means for selectively outputting the cut-out image selected by the selection signal.

Still another image processing apparatus of the present invention includes: means for extracting a candidate region of an object from a given original image; means for generating and outputting a cut-out image for the candidate region; and means for receiving an instruction signal instructing an adjustment of a position of a cut-out region of the cut-out image, wherein the cut-out image generation means adjusts the position of the cut-out region according to the instruction signal so as to generate and output a new cut-out image.

An image processing method of the present invention is a method, wherein: an image processing apparatus extracts a candidate region of an object from a given original image, generates a plurality of cut-out images for a plurality of candidate regions, respectively, when the plurality of candidate regions are detected, and transmits a list image listing the cut-out images; a portable terminal receives the list image and displays the list image on a screen, allows a user to input a selection signal for selecting one of the cut-out images listed in the list image, and transmits the selection signal to the image processing apparatus; and the image processing apparatus receives the selection signal to select one of the cut-out images based on the selection signal and to transmit the selected cut-out image to the portable terminal.

Another image processing method of the present invention is a method, wherein: an image processing apparatus extracts a candidate region of an object from a given original image, and generates and transmits a cut-out image for the candidate region, a portable terminal receives the cut-out image and displays the cut-out image on a screen, allows a user to input a instruction signal instructing an adjustment of a position of a cut-out region of the cut-out image, and transmits the instruction signal to the image processing apparatus; and the image processing apparatus receives the instruction signal to adjust the position of the cut-out region according to the instruction signal and to generate and transmit a new cut-out image to the portable terminal.

Still another image processing method of the present invention includes the steps of: extracting a candidate region of an object from a given original image; and setting a cut-out region based on the candidate region so as to cut out an image of the object from the original image, wherein in the cut-out region setting step, a reference for setting a position of the cut-out region can be switched depending on circumstances. The present invention also provides a program for instructing a computer to perform the image processing method.

Still another image processing method of the present invention includes the steps of: extracting a candidate region of an object from a given original image; setting a cut-out region based on the candidate region so as to cut out an image of the object from the original image; and smoothing the cut-out region in a time direction of the original image. The present invention also provides a program for instructing a computer to perform the image processing method.

Still another image processing method of the present invention includes the steps of: extracting a candidate region of an object from a given original image; and setting a cut-out region based on the candidate region so as to cut out an image of the object from the original image, wherein when a plurality of candidate regions are detected, the cut-out region is set based on one of the candidate regions having the largest area in the cut-out region setting step. The present invention also provides a program for instructing a computer to perform the image processing method.

## BRIEF DESCRIPTION OF THE DRAWINGS

FIG. **1** is an example of a hardware configuration of an image processing apparatus that is common among the first to third embodiments of the present invention.

FIG. **2** is a flow chart illustrating the flow of an image process of the first embodiment of the present invention.

FIG. **3A** is an example of an original image, and FIG. **3B** is an example of a cut-out image obtained from the original image in the first embodiment of the present invention.

FIG. **4A** is an example of an original image, and FIG. **4B** is an example of a cut-out image obtained from the original image in the first embodiment of the present invention.

FIG. **5** is a flow chart illustrating the flow of an image process of the second embodiment of the present invention.

FIG. **6** is a flow chart illustrating the flow of an image process of the third embodiment of the present invention.

FIG. **7** is an example of a hardware configuration that is common among the fourth to seventh embodiments of the present invention.

FIG. **8** is a flow chart illustrating the flow of a process of the fourth embodiment of the present invention.

FIG. **9** is a flow chart illustrating the flow of a process of the fifth embodiment of the present invention.

FIG. **10** is a flow chart illustrating the flow of a process of the sixth embodiment of the present invention.

FIG. **11** is an example of an original image.

FIG. **12A** and FIG. **12B** are each an example of a display image obtained from the original image of FIG. **11**.

FIG. **13** is a flow chart illustrating the flow of a process of the seventh embodiment of the present invention.

FIG. **14** is an example of an original image.

FIG. **15A** and FIG. **15B** are each an example of a display image obtained from the original image of FIG. **14.**

FIG. **16** is a flow chart illustrating the process flow of a conventional object image cutting-out apparatus.

FIG. **17A** is an example of an original image, and FIG. **17B** is an example of a cut-out image obtained from the original image by a conventional method.

FIG. **18A** is an example of an original image, and FIG. **18B** is an example of a cut-out image obtained from the original image by a conventional method.

## DETAILED DESCRIPTION OF THE INVENTION

Embodiments of the present invention will now be described with reference to the drawings.

### FIRST EMBODIMENT

FIG. **1** is an example of a hardware configuration of an image processing apparatus that is common among the first to third embodiments of the present invention. Referring to FIG. **1,** the image processing apparatus includes a wide angle camera **10**, which is installed at a corner of a room, for example, an image input interface **20**, a data bus **30**, a CPU **40**, an image memory **50**, a work memory **60**, a program memory **70**, an image output interface **80**, and a display unit **90**.

In the configuration as illustrated in FIG. **1**, the wide angle camera **10** obtains the image of the room within the field of view thereof. Video signals obtained by the wide angle camera **10** are passed from the image input interface **20** to the image memory **50** via the data bus **30**, and are stored in the image memory **50**. The CPU **40** processes the image data stored in the image memory **50** by using the work memory **60** according to a program stored in the program memory **70**, and displays the processed image on the display unit **90** via the image output interface **80.**

FIG. **2** is a flow chart illustrating the flow of an image process of the first embodiment of the present invention. In FIG. **2,** S10 is a step of receiving, as an original image, an image obtained by the wide angle camera **10**, S20 is a step of extracting a candidate region of the object, S30 is a step of determining the presence/absence of a candidate region, S40 is a step of setting a cut-out region, S50 is a step of cutting out an image of the object from the original image by using the cut-out region, which has been set in step S40, and S60 is a step of displaying the cut-out image. Moreover, S70 is a step of reading out the cut-out region of the previous frame from the cut-out region information DB **110**, in a case where a candidate region is not detected in step S70. The cut-out region information DB **110** is provided in the work memory **60**.

Steps S20 to S50 and S70 are performed by the CPU **40** executing the program stored in the program memory **70**. Herein, step S20 corresponds to "candidate region detection means" of the present invention, and step S40 corresponds to "cut-out region setting means" of the present invention.

An operation of the image processing apparatus of the present embodiment will be described with reference to the flow chart of FIG. **2**.

In step S10, the original image obtained by the wide angle camera **10** is read into the data bus **30** via the image input interface **20** in a CIF format (356 pixels x 288 lines), and then the original image is stored in the image memory **50** and is read into the CPU **40** for processing.

Then, in step S20, a candidate region of the object is detected from the given original image. While there are various possible ways of detecting the candidate region, a region is extracted herein by using a background subtraction method. Then, in step S30, the number of pixels of the candidate region is compared with a predetermined threshold value so as to determine whether an appropriate candidate region has been detected. If a candidate region is detected, the process proceeds to the cut-out region setting step S40, and to step S70 otherwise.

In the cut-out region setting step S40, a cut-out region by which the object image is cut out from the original image is set. Herein, the reference for setting the position of the cut-out region can be switched from one to another depending on a characteristic of the candidate region, and the area that is occupied by the candidate region in the original image is used as the characteristic of the candidate region.

First, in step S41, the size that is occupied by the candidate region in the original image is compared with the size of the cut-out region. Herein, the size of the cut-out region is equal to that of a QCIF image (178 pixels x 144 lines), and the vertical size of the circumscribed rectangle of the candidate region is compared with that of the cut-out region. The term "vertical size" as used herein refers to "the number of pixels in the column direction". If the relationship:

Vertical size of circumscribed rectangle < Vertical size of cut-out region holds (i.e., "No" in step S41), the center of the circumscribed rectangle of the candidate region is obtained (step S42), and the cut-out region is set so that the center thereof is aligned with the center of the circumscribed rectangle of the candidate region (step S43). On the other hand, if the relationship:

Vertical size of circumscribed rectangle > Vertical size of cut-out region holds (i.e., "Yes" in step S41), the cut-out region is set so that an upper edge portion of the circumscribed rectangle, as a specified portion of the candidate region, is included in the cut-out region (step S44).

Then, in step S50, an image in the cut-out region is cut out from the original image, and in step S60, the cut-out image is displayed on the display unit **90** via the image output interface **80** by the CPU **40** using the image memory **50**. Moreover, the positional information of the set cut-out region is stored in the cut-out region information DB **110**.

On the other hand, if it is determined in step S30 that a candidate region is not present in the current frame, the positional information of the cut-out region of the previous frame is read out from the cut-out region information DB **110**, and the cut-out region is set at the read-out position. In this way, even if a candidate region cannot be extracted by a background subtraction method when, for example, the object stands still for a long time, it is still possible to set the cut-out region.

FIG. **3A** and FIG. **4A** are each an example of an original image, and FIG. **3B** and FIG. **4B** are each an example of a cut-out image obtained from the original image in the present embodiment, where the wide angle camera **10** obtains the image of a person walking in a room. In FIG. **3A** and FIG. **4A, CA1** and **CA2** each denote a candidate region of the object, **R1** and **R2** denote circumscribed rectangles of the candidate regions **CA1** and **CA2,** respectively, and **A1** and **A2** each denote a cut-out region.

In a case where the candidate region **CA1** is sufficiently smaller than the cut-out region **A1** as in the example of FIG. **3A,** the cut-out region **A1** is set relative to a center **CN1** of the candidate region **CA1** in step S43, thereby obtaining a cut-out image with the object being centered therein. On the other hand, in a case where the vertical size of the candidate region **CA2** is greater than that of the cut-out region **A2** as in the example of FIG. **4A**, the vertical position of the cut-out region **A2** is determined so that an upper edge UE of the circumscribed rectangle **R2** of the candidate region **CA2** is included in the cut-out region **A2** while the candidate region **CA2** is horizontally centered in the cut-out region **A2** in step S44.

As described above, according to the present embodiment, the reference for setting the position of the cut-out region can be switched from one to another depending on the relationship between the size of the candidate region of the object and that of the cut-out region. For example, when the candidate region is sufficiently smaller than the cut-out region, it is possible to obtain a cut-out image with the objected being centered therein, whereas when the candidate region is so large that it extends beyond the cut-out region, it is possible to obtain a cut-out image that includes therein an upper edge portion of the object, which corresponds to the head where the object is a person. Thus, it is possible to always cut out an object image such that it is easy to grasp the scene surrounding the object.

Note that the size of the candidate region is compared with that of the cut-out region by comparing the vertical size of the circumscribed rectangle of the candidate region with that of the cut-out region in the present embodiment. Alternatively, the comparison can be made by using any other appropriate parameter.

Moreover, the reference for setting the position of the cut-out region is switched from one to another based on the size of the candidate region in the present embodiment. Alternatively, the reference may be switched from one to another based on any other appropriate information. For example, the reference may be switched from one to another based on the position of the candidate region in the original image, as a characteristic of the candidate region. Where the actual size of the object is known or can be estimated, if the position of the object on the camera image can be determined, it is possible to approximately estimate the area of the camera image to be occupied by the object. Thus, for example, the cut-out region can be set relative to the center of the candidate region if the candidate region is far away from the camera, whereas the cut-out region can be set so that the upper edge of the candidate region is included in the cut-out region if the candidate region is close to the camera.

Alternatively, if the distance between the camera and the object can be measured by a range finder, for example, the reference may be switched from one to another based on the distance.

Moreover, when the candidate region is relatively large, the cut-out region is set so that the upper edge portion of the candidate region, as a specified portion of the candidate region, is included in the cut-out region in the present embodiment. However, the present invention is not limited to this. When the object is a person or an animal, it is preferred that the specified portion is the face or the head. In such a case, the position of the face or the head may be detected by using some means therefor so that the cut-out region can be set so that the position is included in the cut-out region. Alternatively, the position of a leg may be detected so that the position of the face or the head can be estimated based on the position of the leg. Alternatively, in a case where the object is an animal, a side edge portion of the candidate region may be used as the specified portion.

SECOND EMBODIMENT

FIG. **5** is a flow chart illustrating the flow of an image process of the second embodiment of the present invention, wherein those steps that are already shown in FIG. **2** are provided with the same reference numerals. In FIG. **5**, S81 is a step of selecting a candidate region having the largest area when a plurality of candidate regions are detected in step S20, S82 is a step of smoothing the cut-out region, which has been set in step S40, in the time direction of the original image, and S83 is a step of delaying the original image by the amount of time of the smoothing operation in step S82. Herein, step S82 corresponds to "smoothing means" of the present invention, and step S83 corresponds to "delay means" of the present invention. Moreover, steps S81 and S40 correspond to "cut-out region setting means" of the present invention.

When a candidate region is extracted by using a background subtraction method, or the like, the circumscribed rectangle may appear shaken from frame to frame due to a fluctuation in lighting, or the like, being a noise factor. In such a case, the cut-out region may jolt from frame to frame, thereby resulting in a display image that is very hard to view as a motion image. In order to address such a problem, the cut-out region is smoothed in the time direction in the present embodiment.

An operation of the image processing apparatus of the present embodiment will be described with reference to the flow chart of FIG. **5**.

In step S10, the original image obtained by the camera **10** is read in a CIF format, and then in step S20, a candidate region of the object is extracted from the original image. Then, if a candidate region is detected, the process proceeds to step S81, and to step S70 otherwise (step S30).

In step S81, if there are a plurality of candidate regions in the current frame, one candidate region that has the largest area is selected. If there is only one candidate region, the candidate region is selected. Then, in the cut-out region setting step S40, the cut-out region is set based on the candidate region selected in step S81, as in the first embodiment. The positional information of the set cut-out region is stored in the cut-out region information **DB 110**.

Then, in step S82, the cut-out region, which has been set in step S40, is smoothed in the time direction. Herein, where the coordinates of the center of the set cut-out region are (Xin, Yin), and the frame interval is T, the coordinates (Xw, Yw) of the center of the smoothed cut-out region are obtained as follows:

$$Xw(t) = \tau * Xin(t) - (1-\tau) * Xw(t-T) \quad (1)$$

$$Yw(t) = \tau * Yin(t) - (1-\tau) * Yw(t-T) \quad (2)$$

where $\tau$ is a time constant for smoothing, which satisfies $0 \leq \tau \leq 1$

For example, where T=0.1 sec, the smoothing time constant $\tau$ is set to be about 0.1 to 0.3. Then, the cut-out region moves smoothly even in cases where the cut-out region as extracted in step S20 would somewhat jolt.

In step S83, the original image is delayed by N frames (N is a natural number). Since the cut-out region is smoothed in the time direction in step S82, the movement of the cut-out region is delayed from the actual movement of the object, and step S83 is for matching the timing of the cut-out region with that of the original image. For example, where T=0.1 sec and $\tau$=0.1, the number of frames, N, by which the original image is delayed can suitably be set to about 5.

Then, in step S50, an image in the smoothed cut-out region is cut out from the original image, which has been delayed by N frames, and the cut-out image is displayed in step S60.

On the other hand, if it is determined in step S30 that a candidate region is not present in the current frame, the positional information of the cut-out region of the previous frame is read out from the cut-out region information DB **110**, and the read-out position is used in the smoothing operation in step S82. In this way, even if a candidate region is not detected when, for example, the object stands still for a long time, the cut-out region gradually approaches the position before the disappearance of the object.

As described above, according to the present embodiment, even if a plurality of candidate regions are extracted, only the candidate region having the largest area is used for setting the cut-out region, whereby the object can be tracked stably. Moreover, even if the extracted candidate region somewhat jolts from frame to frame, the cut-out region moves smoothly by smoothing the cut-out region in the time direction.

Note that only the position of the cut-out region is changed while the size of the cut-out region is fixed in the present embodiment. Alternatively, the size of the cut-out region may be changed. Moreover, in the smoothing operation by using a time direction linear filter, the time constant $\tau$ may be changed based on the direction in which the cut-out region is moving or based on the direction in which the size thereof is changing (i.e., whether the size is increasing or decreasing).

Moreover, the smoothing of the cut-out region in the time direction may be performed by using any other appropriate method other than using a time direction linear filter.

THIRD EMBODIMENT

FIG. **6** is a flow chart illustrating the flow of an image process of the third embodiment of the present invention, wherein those steps that are already shown in FIG. **5** are provided with the same reference numerals. In FIG. **6**, as compared with FIG. **5**, the frame delaying step S83 is omitted, while step S90 of changing the manner of setting the cut-out region based on the direction in which the candidate region is moving is added. Steps S81, S40 and S90 correspond to "cut-out region setting means" of the present invention.

In step S90, the direction in which the candidate region has moved from the previous frame is first calculated (step S91), and then it is determined whether the movement direction is upward on the image (step S92). Then, if the direction in which the candidate region is moving is upward, the cut-out region is set so that the upper edge portion of the cut-out region is located above the upper edge portion of the circumscribed rectangle of the candidate region with some extra space therebetween (step S93). On the other hand, if the direction in which the candidate region is moving is other than upward, the cut-out region is set so that the upper edge portion of the circumscribed rectangle of the candidate region is aligned with that of the cut-out region (step S94).

As described above in the second embodiment, in a case where the cut-out region is smoothed in the time direction, the movement of the cut-out region is delayed from the actual movement of the object. The second embodiment addresses this problem by also delaying the original image, from which a portion is to be cut out, accordingly. In contrast, in the present embodiment, when the object is moving upward, the cut-out region is set with a margin above the candidate region, whereby particularly in a case where the object is a person, it is possible to prevent the head from being partially cut off in the cut-out image.

As described above, according to the present embodiment, the method for setting the cut-out region is changed based on the direction in which the candidate region is moving, whereby it is possible to output a cut-out image in which the object is not partially cut off, without delaying the original image.

FOURTH EMBODIMENT

FIG. **7** is an example of a hardware configuration that is common among the fourth to seventh embodiments of the present invention, wherein those elements that are already shown in FIG. **1** are provided with the same reference numerals. FIG. **7** shows an image transmission apparatus **1** that incorporates therein an image processing apparatus having a function of cutting out an object image as illustrated in FIG. **1.** The image transmission apparatus **1** as an image processing apparatus includes two cameras, i.e., an interphone camera **10a** and an in-house camera **10b,** instead of the wide angle camera **10.** The cameras **10a** and **10b** are connected to image input interfaces **20a** and **20b,** respectively. The image input interfaces **20a** and **20b** are connected to the data bus **30** via a switcher **101**. The image transmission apparatus **1** further includes a codec **102** and a transceiver circuit **103** so that the image transmission apparatus **1** can communicate with a mobile phone **3**, as a portable terminal, via a public network **2**.

Whether an image from the interphone camera **10a** or an image from the in-house camera **10b** is to be processed is selected based on the settings of the switcher **101.** A cut-out image obtained by the image processing operation may be encoded by the codec **102** and transmitted by the transceiver circuit **103** to any mobile phone **3** via the public network **2**, instead of outputting it to the display unit **90**. Conversely, data from the mobile phone **3** may be received by the transceiver circuit **103** and decoded by the codec **102** so that the data can be used as a process parameter.

FIG. **8** is a flow chart illustrating the flow of a process of the fourth embodiment of the present invention, wherein those steps or elements that are already shown in FIG. **5** are provided with the same reference numerals. In FIG. **8**, as compared with FIG. **5**, a switch **SWA** for selecting an image to be received is provided instead of the original image input step S10, and a switch **SWB** and three cut-out region setting steps S101, S102 and S103 are provided instead of the cut-out region setting step S40.

The image transmission apparatus **1** further includes a parameter set DB **120** storing a plurality of sets of parameters that are used for setting the cut-out region. The parameters used herein include the position of the switch **SWA,** the position of the switch **SWB**, a lower limit threshold value **SL** and an upper limit threshold value **SU** of the number of pixels of a candidate region extracted in step S20, the time constant $\tau$ used in the smoothing operation in step S82, and the number of frames, N, by which the original image is delayed in step S83. Herein, it is assumed that three sets of parameters are preset, i.e., Set 1 for viewing the image of the interphone camera **10a**, Set 2 for monitoring a person through the in-house camera **10b**, and Set 3 for monitoring a pet through the in-house camera **10b**.

An operation of the system configured as described above with reference to FIG. **7** and FIG. **8** will be described.

It is assumed that the image transmission apparatus 1 is currently communicating with the mobile phone **3** via the public network **2.** In step S130, the user of the mobile phone **3** selects one of the three parameter sets, i.e., Set **1** for viewing the image of the interphone camera **10a,** Set 2 for monitoring a person through the in-house camera **10b**, and Set 3 for monitoring a pet through the in-house camera **10b.** The selection can be made, for example, by using a numeral key or a joy stick while viewing a selection screen displayed on a display unit of the mobile phone **3**.

The selection made in step S130 is received by the image transmission apparatus **1** via the public network **2** (step S140), and the image transmission apparatus **1** accesses the parameter set DB **120** to set a parameter set based on the received selection (step S150).

When Set 1, i.e., a set of parameters for viewing the image of the interphone camera **10a**, is selected, the switch **SWA** is set to the position "a" while the switch **SWB** is set to the position "A". In the case of an interphone camera image, a visitor, i.e., the object, occupies a large area in the image. Therefore, the threshold values **SL** and **SU** are set to be large while the time constant $\tau$ is also set to be relatively large, and the number of frames, N, by which the original image is delayed is set to be small accordingly, so as to increase the response speed of the movement of the cut-out region. Then, in step S101, the cut-out region is set so that the upper edge portion of the candidate region of the person is included therein so as to ensure that the head of the person is included in the cut-out image in any case.

When Set 2, i.e., a set of parameters for monitoring a person through the in-house camera **10b,** is selected, the switch **SWA** is set to the position "b" while the switch **SWB** is set to the position "B". When a person in a room is monitored through the in-house camera **10b**, the area proportion of the candidate region is smaller than that in the case of the interphone camera **10a.** Therefore, the threshold values **SL** and **SU** are set to be smaller than those of Set 1. Moreover, since the speed at which the object moves on the image is low and the candidate region detection precision is poor, the time constant $\tau$ is set to be small and the number of frames, N, by which the original image is delayed is set to be large accordingly, so as to decrease the response speed of the movement of the cut-out region to prevent the cut-out image from jolting. Then, in step S102, a process as that of the cut-out region setting step S40 of the first embodiment is performed. Specifically, when the candidate region of the object is sufficiently smaller than the cut-out region, the cut-out region is set so that the object is centered therein, whereas when the candidate region is so large that it extends beyond the cut-out region, the cut-out region is set so that the upper edge portion, which is the head in a case of a person, does not extend beyond the cut-out image.

When Set 3, i.e., a set of parameters for monitoring a pet through the in-house camera **10b**, is selected, the switch **SWA** is set to the position "b" while the switch **SWB** is set to the position "C". When a small animal such as a pet is monitored through the in-house camera **10b,** the area of the candidate region further decreases as compared with a case where a person is monitored. Therefore, the threshold values **SL** and **SU** are set to be further smaller. Moreover, since the speed at which the object moves on the image is low and the candidate region detection precision is poor, the time constant $\tau$ is set to be less than or equal to that for Set 2 and the number of frames, N, by which the original image is delayed is set to be equal to or greater than that for Set 2 accordingly, so as to decrease the response speed of the movement of the cut-out region to prevent the cut-out image from jolting. Then, in step S103, the cut-out region is set so as to obtain a cut-out image with the object being centered therein.

Then, the cut-out region is smoothed by using the time constant $\tau$ in step S82, and the original image is delayed in step S83. Then, in step S50, an image is cut out. The obtained cut-out image is transmitted in an image transmission step S110, and is displayed on a display screen of the mobile phone **3** in an image displaying step S120.

As described above, according to the present embodiment, a plurality of parameter sets for setting the cut-out region are preset, and the cut-out region is set by using the selected one of the parameter sets. Therefore, it is possible to produce an appropriate cut-out image. Moreover, since a parameter set can be selected based on a selection signal that is received from outside, the user can select the most suitable parameter set to obtain the most suitable cut-out image for the user's need.

Note that other parameters than those shown in the present embodiment may be included in the parameter set, or one or some of the parameters shown herein may be omitted. Moreover, the parameter sets may be preset either by the manufacturer before shipping or by the user.

## FIFTH EMBODIMENT

FIG. **9** is a flow chart illustrating the flow of a process of the fifth embodiment of the present invention, wherein those steps or elements that are already shown in FIG. **8** are provided with the same reference numerals. In FIG. **9**, as compared with FIG. **8**, an automatic input switching step S161 is provided instead of the switch **SWA**, and an automatic parameter set selection step S162 is provided instead of steps S130, S140 and S150. Furthermore, the parameters stored in a parameter set DB **120A** do not include the upper limit and the lower limit for the area of the candidate region, and the data structure is such that a parameter set is called by using, as keys, the type of a camera used for obtaining the original image and the area of the candidate region.

In the automatic input switching step S161, if there is a video signal from the interphone camera **10a,** the video signal is output, whereas if there is no video signal from the interphone camera **10a**, a video signal from the in-house camera **10b** is output. In the automatic parameter set selection step S162, one of the three parameter sets, which have been preset in the parameter set DB **120A**, is selected based on the type of the camera, which has output the video signal selected in the automatic input switching step S161, and based on the size of the candidate region of the object detected in step S20.

Specifically, when a video signal from the interphone camera **10a** is selected in step S161, Set 1 is selected in step S162 irrespective of the area of the candidate region of the object. When a video signal from the in-house camera **10b** is selected in step S161 and the area of the candidate region is greater than 200 pixels, Set 2 is selected in step S162. Furthermore, when a video signal from the in-house camera **10b** is selected in step S161 and the area of the candidate region of the object is greater than 40 pixels and less than 200 pixels, Set 3 is selected in step S162. Through such an operation, the parameter sets are switched from one to another automatically without the user having to select a parameter set.

In the present embodiment as described above, a parameter set is selected automatically based on the type of a camera used for obtaining the original image and the size of the candidate region of the object. Therefore, it is possible to obtain a cut-out image suitable for the user's need without the user being bothered to perform an operation.

Note that the present embodiment may be combined with a method in which the user selects a parameter set as that of the fourth embodiment. Moreover, other information, e.g., interphone call information, may alternatively be used for selecting a parameter set. Furthermore, the parameters may alternatively be selected based on one of the type of the camera used for obtaining the original image and the size of the candidate region.

## SIXTH EMBODIMENT

FIG. **10** is a flow chart illustrating the flow of a process of the sixth embodiment of the present invention, wherein those steps or elements that are already shown in FIG. **2** and FIG. **8** are provided with the same reference numerals. Moreover, FIG. **11** is an example of an original image (in-house camera image), and FIG. **12A** and FIG. **12B** are each an example of a display image on a mobile phone **3B** obtained from the original image of FIG. **11.**

Initially, switches **SWC**, **SWD** and **SWE** are each set to the position "A". Herein, it is assumed that three candidate regions **CAa**, **CAb** and **CAc** as illustrated in FIG. **11** are extracted in step S20. In a tracking step S171, frames are associated with one another for each of the candidate regions **CAa**, **CAb** and **CAc**, and each of the candidate regions is tracked. In steps S40 and S82, cut-out regions **Aa, Ab** and **Ac** are determined for the candidate regions **CAa**, **CAb** and **CAc**, respectively, by a method as already described above. Then, in an image synthesis step S172, three images are cut out from the delayed image obtained in step S83 according to the three cut-out regions **Aa, Ab** and **Ac,** and the obtained cut-out images are synthesized together. The synthesized image is transmitted to the mobile phone **3B** in step S110, and an image as illustrated in FIG. **12A** is displayed (step S120).

The user views the synthesized image as illustrated in FIG. **12A**, and can select one of three display windows (step S173). For example, one of these display windows can be selected by inputting the number shown in the child screen by using a numeral key of the mobile phone **3B.** The selection is received in step S174, and then the switches **SWC, SWD** and **SWE** are each set to the position "B".

In an image selection step S175, if the user selects the display window #**1**, for example, the positional information of only the candidate region **CAc**, which corresponds to the user's selection, is passed to the cut-out region setting step S40. Then, the cut-out region **Ac** obtained through steps S40 and S82 is provided to the cutting-out step S50, and a cut-out image including the candidate region **CAc** therein is transmitted to the mobile phone **3B.** As a result, the user can view a cut-out image as illustrated in FIG. **12B**. Thereafter, frames are associated with one another in the tracking step S171, thereby allowing the user to view a motion image including the candidate region **CAc** therein on the screen of the mobile phone **3B**.

As described above, according to the present embodiment, the user can easily view an object of interest even from a remote location.

SEVENTH EMBODIMENT

FIG. **13** is a flow chart illustrating the flow of a process of the seventh embodiment of the present invention, wherein those steps or elements that are already shown in FIG. **2** and FIG. **8** are provided with the same reference numerals. Moreover, FIG. **14** is an example of an original image (in-house camera image), and FIG. **15A** and FIG. **15B** are each an example of a display image on a mobile phone **3C** obtained from the original image of FIG. **14.**

As described above in the first embodiment, in the cut-out region setting step S40, the position of the cut-out region is set so that the upper edge portion of the candidate region is included in the cut-out region if the candidate region extends beyond the cut-out region in the vertical direction, whereas the cut-out region is set so that the center thereof is aligned with the center of the circumscribed rectangle of the candidate region with no special positional adjustment if the candidate region extends beyond the cut-out region in the horizontal direction. Therefore, in a case where a person is lying down in the room, for example, as illustrated in FIG. **14,** the side edge portions of a candidate region **CAd** will be outside a cut-out region **Ad**. As a result, a cut-out image as illustrated in FIG. **15A** is displayed on the screen of the mobile phone **3C.**

In view of this, the present embodiment sets a plurality of focus points, including the center of a circumscribed rectangle **Rd** of the candidate region **CAd,** each corner of the circumscribed rectangle **Rd,** and the middle point of each side of the circumscribed rectangle **Rd**, as illustrated in FIG. **14.** The focus points are numbered in advance. Then, in the cut-out region setting step S40, the position of the cut-out region is adjusted so that a designated focus point is included therein.

Specifically, the user selects one of the focus points in step S181 by using a numeral key of the mobile phone **3C,** for example. The selection is received by an image transmission apparatus **1C** (step S182), and is provided to a cut-out region position correcting step S183. For example, when the focus point (6) is selected, the position of the cut-out region **Ad** is corrected rightward so that the focus point (6), i.e., the middle point of the right side, is included in the cut-out image. As a result, a cut-out image including the head of the person therein, as illustrated in FIG. **15B**, is transmitted to the mobile phone **3C.**

As described above, according to the present embodiment, the user can easily view a region of interest even when a person being monitored is lying beyond the cut-out region.

Note that while the original image is provided in a CIF format in the description above, the original image may alternatively be an image of any other appropriate format. Moreover, while the size of the cut-out region has been described above to be as that of a QCIF image, it may alternatively be any other appropriate size. Moreover, the shape of the cut-out region is not limited to a rectangle, but may alternatively be any other appropriate shape, including a circle and an irregular shape. Moreover, while the candidate region is extracted by using a background subtraction method in the description above, the extraction operation may alternatively be performed by using any other appropriate algorithm such as those based on the motion vector, the optical flow, the shape, or the color.

Note that the camera for obtaining the original image may not be a wide angle camera, and may not be installed in a room. For example, an image obtained by a camera installed on a robot may be used as the original image, and the object may be another robot.

Moreover, in the image processing apparatus of the present invention, a camera is not indispensable. Specifically, the present invention can alternatively be carried out by instructing a PC, or the like, to execute a program with an original image that has been recorded on a memory device or an HDD.

As described above, according to the present invention, it is possible to cut out an image, in which the object is displayed in a well-balanced manner, irrespective of whether the object occupies a small area or a large area in the original image. Moreover, the cut-out region is prevented from jolting, whereby it is possible to obtain a display image that is easy to view as a motion image. Furthermore, even when the user is in a remote location, the user can view an image of an object of interest on a screen of a portable terminal through a simple operation.

## Claims

**1.** An image processing apparatus, comprising:

means for extracting a candidate region of an object from a given original image; and
means for setting a cut-out region based on the candidate region so as to cut out an image of the object from the original image,

wherein the cut-out region setting means is configured so that a reference for setting a position of the cut-out region can be switched depending on circumstances.

**2.** The image processing apparatus of claim 1, wherein the cut-out region setting means switches the reference based on a characteristic of the candidate region.

**3.** The image processing apparatus of claim 2, wherein the cut-out region setting means uses, as the characteristic of the candidate region, a size that the candidate region occupies in the original image.

**4.** The image processing apparatus of claim 3, wherein the cut-out region setting means sets the cut-out region so that the candidate region is substantially centered in the cut-out region when the candidate region is smaller than the cut-out region, whereas a specified portion of the candidate region is included in the cut-out region when the candidate region is larger than the cut-out region.

**5.** The image processing apparatus of claim 4, wherein:

the object is a person or an animal; and
the specified portion is a face or a head of the object.

**6.** The image processing apparatus of claim 4, wherein the specified portion is an upper edge portion of the candidate region.

**7.** The image processing apparatus of claim 2, wherein the cut-out region setting means uses, as the characteristic of the candidate region, a position of the candidate region in the original image.

**8.** The image processing apparatus of claim 2, wherein the cut-out region setting means uses, as the characteristic of the candidate region, a direction in which the candidate region is moving.

**9.** The image processing apparatus of claim 1, wherein the cut-out region setting means switches the reference based on a distance between a camera having captured the original image and the object.

**10.** The image processing apparatus of claim 1, wherein when a plurality of candidate regions are detected, the cut-out region setting means sets the cut-out region based on one of the candidate regions having the largest area.

**11.** The image processing apparatus of claim 1, further comprising means for smoothing the cut-out region in a time direction of the original image.

**12.** An image processing apparatus, comprising:

means for extracting a candidate region of an object from a given original image;
means for setting a cut-out region based on the candidate region so as to cut out an image of the object from the original image; and
means for smoothing the cut-out region in a time direction of the original image.

**13.** The image processing apparatus of claim 12, further comprising means for delaying the original image so as to compensate for a delay of movement of the cut-out region due to the smoothing operation.

**14.** The image processing apparatus of claim 12, wherein the smoothing means changes a time constant used in the smoothing operation based on whether a size of the cut-out region is increasing or decreasing.

**15.** The image processing apparatus of claim 12, wherein the smoothing means changes a time constant used in the smoothing operation based on a direction in which the cut-out region is moving.

**16.** The image processing apparatus of claim 12, wherein the cut-out region setting means is configured so that a condition for setting the cut-out region can be switched based on a direction in which the candidate region is moving.

**17.** The image processing apparatus of claim 16, wherein the cut-out region setting means sets the cut-out region with a margin above the candidate region when the candidate region is moving upward.

**18.** An image processing apparatus, comprising:

means for extracting a candidate region of an object from a given original image; and
means for setting a cut-out region based on the candidate region so as to cut out an image of the object from the original image,

wherein when a plurality of candidate regions are detected, the cut-out region setting means sets the cut-out region based on one of the candidate regions having the largest area.

**19.** An image processing apparatus, comprising:

means for extracting a candidate region of an object from a given original image;
means for setting a cut-out region based on the candidate region so as to cut out an image of the object from the original image; and
a parameter set DB for storing a plurality of parameter sets used for setting the cut-out region,

wherein the cut-out region setting means sets the cut-out region by using selected one of the plurality of parameter sets stored in the parameter set DB.

**20.** The image processing apparatus of claim 19, further comprising means for selecting one of the parameter sets according to a selection signal received from the outside of the image processing apparatus.

**21.** The image processing apparatus of claim 19, further comprising means for selecting one of the parameter sets based on at least one of a type of a camera capturing the original image and a size of the candidate region.

**22.** An image processing apparatus, comprising:

means for extracting a candidate region of an object from a given original image;
means for generating a plurality of cut-out images for a plurality of candidate regions, respectively, when the plurality of candidate regions are detected, and for outputting an image listing the plurality of cut-out images;
means for receiving a selection signal for selecting one of the plurality of cut-out images; and
means for selectively outputting the cut-out image selected by the selection signal.

**23.** An image processing apparatus, comprising:

means for extracting a candidate region of an object from a given original image;
means for generating and outputting a cut-out image for the candidate region; and
means for receiving an instruction signal instructing an adjustment of a position of a cut-out region of the cut-out image,

wherein the cut-out image generation means adjusts the position of the cut-out region according to the instruction signal so as to generate and output a new cut-out image.

**24.** An image processing method, wherein:

an image processing apparatus
extracts a candidate region of an object from a given original image,
generates a plurality of cut-out images for a plurality of candidate regions, respectively, when the plurality of candidate regions are detected, and
transmits a list image listing the cut-out images;
a portable terminal
receives the list image and displays the list image on a screen,
allows a user to input a selection signal for selecting one of the cut-out images listed in the list image, and
transmits the selection signal to the image processing apparatus; and
the image processing apparatus receives the selection signal to select one of the cut-out images based on the selection signal and to transmit the selected cut-out image to the portable terminal.

**25.** An image processing method, wherein:

an image processing apparatus
extracts a candidate region of an object from a given original image, and
generates and transmits a cut-out image for the candidate region,
a portable terminal
receives the cut-out image and displays the cut-out image on a screen,
allows a user to input a instruction signal instructing an adjustment of a position of a cut-out region of the cut-out image, and
transmits the instruction signal to the image processing apparatus; and
the image processing apparatus receives the instruction signal to adjust the position of the cut-out region according to the instruction signal and to generate and transmit a new cut-out image to the portable terminal.

**26.** An image processing method, comprising the steps of:

extracting a candidate region of an object from a given original image; and
setting a cut-out region based on the candidate region so as to cut out an image of the object from the original image,

wherein in the cut-out region setting step, a reference for setting a position of the cut-out region can be switched depending on circumstances.

**27.** A program for instructing a computer to process an image, wherein the program instructs the computer to perform the steps of:

extracting a candidate region of an object from a given original image; and
setting a cut-out region based on the candidate region so as to cut out an image of the object from the original image,

wherein in the cut-out region setting step, a reference for setting a position of the cut-out region can be switched depending on circumstances.

**28.** An image processing method, comprising the steps of:

extracting a candidate region of an object from a given original image;
setting a cut-out region based on the candidate region so as to cut out an image of the object from the original image; and
smoothing the cut-out region in a time direction of the original image.

**29.** A program for instructing a computer to process an image, wherein the program instructs the computer to perform the steps of:

extracting a candidate region of an object from a given original image;
setting a cut-out region based on the candidate region so as to cut out an image of the object from the original image; and
smoothing the cut-out region in a time direction of the original image.

**30.** An image processing method, comprising the steps of:

extracting a candidate region of an object from a given original image; and
setting a cut-out region based on the candidate region so as to cut out an image of the object from the original image,

wherein when a plurality of candidate regions are detected, the cut-out region is set based on one of the candidate regions having the largest area in the cut-out region setting step.

**31.** A program for instructing a computer to process an image, wherein the program instructs the computer to perform the steps of:

extracting a candidate region of an object from a given original image; and
setting a cut-out region based on the candidate region so as to cut out an image of the object from the original image,

wherein when a plurality of candidate regions are detected, the cut-out region is set based on one of the candidate regions having the largest area in the cut-out region setting step.

FIG. 1

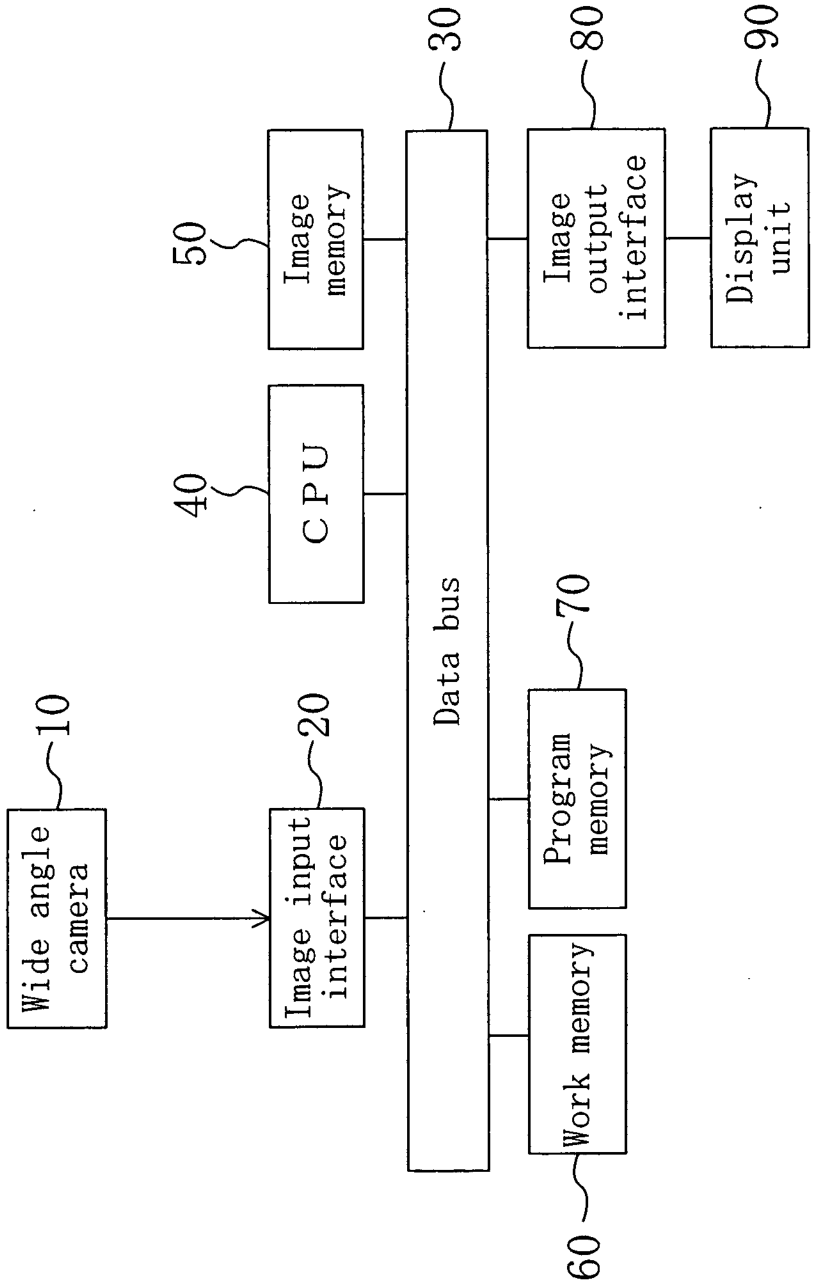
Wide angle camera
10
Image input interface
20
Data bus
30
CPU
40
Image memory
50
Work memory
60
Program memory
70
Image output interface
80
Display unit
90

FIG. 2

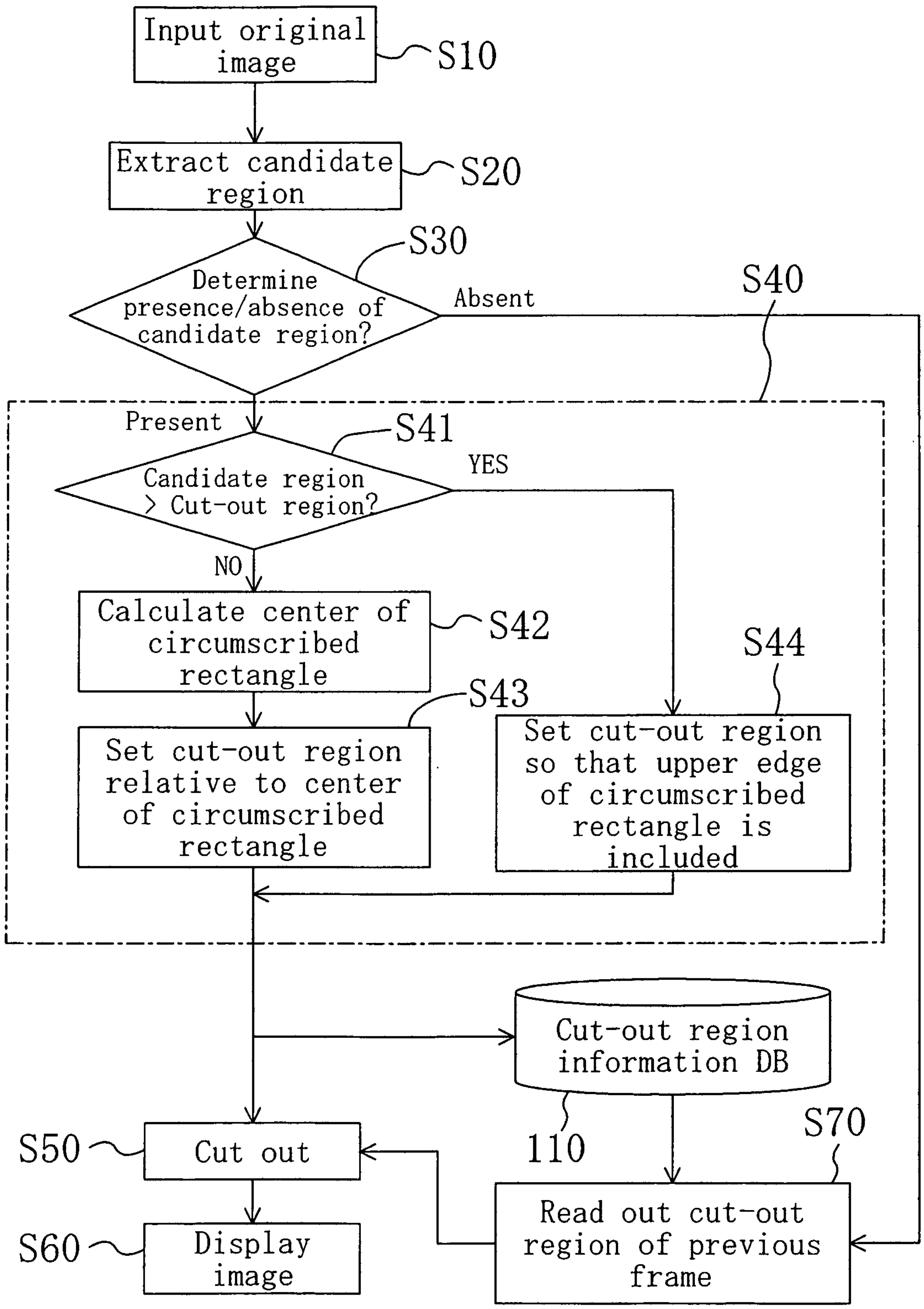
Input original image
S10
Extract candidate region
S20
S30
Determine presence/absence of candidate region?
Absent
S40
Present
S41
Candidate region > Cut-out region?
YES
NO
Calculate center of circumscribed rectangle
S42
S44
S43
Set cut-out region relative to center of circumscribed rectangle
Set cut-out region so that upper edge of circumscribed rectangle is included
Cut-out region information DB
110
S70
S50
Cut out
S60
Display image
Read out cut-out region of previous frame

FIG. 3A

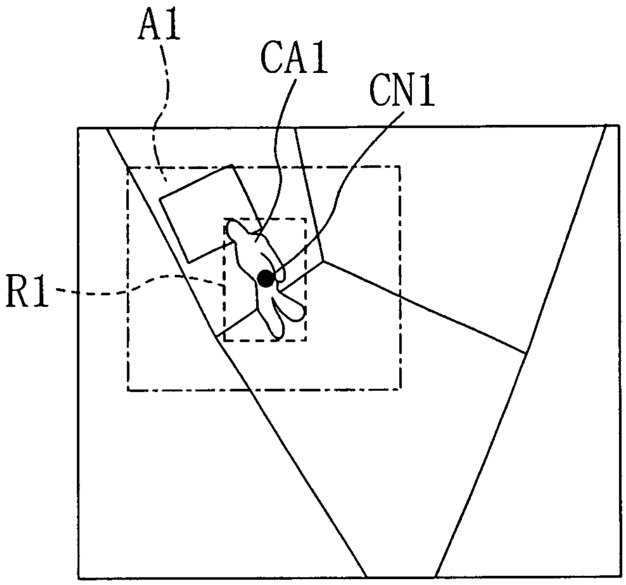


FIG. 3B

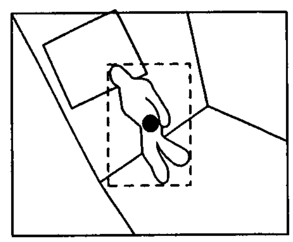

FIG. 4A

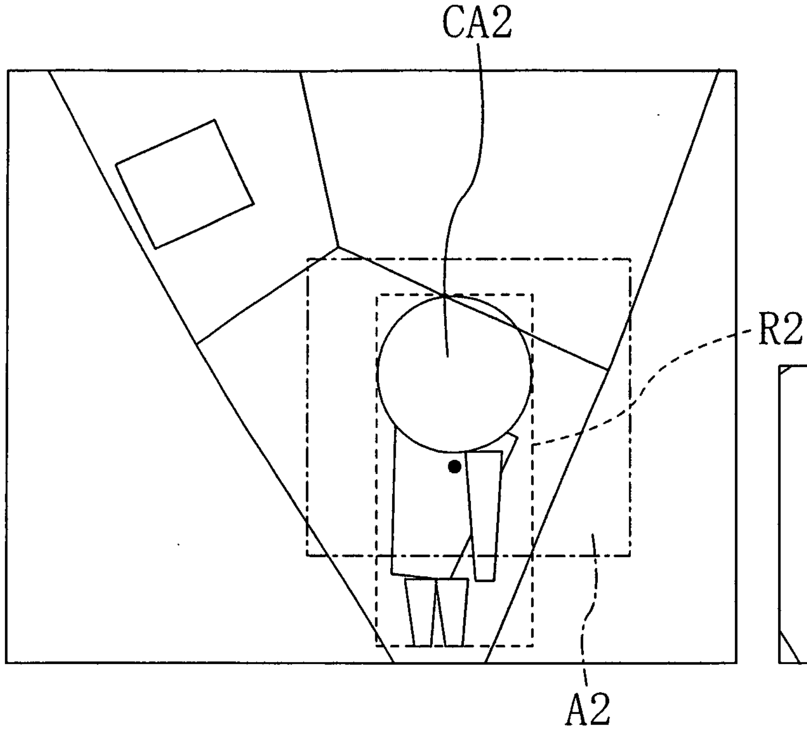


FIG. 4B

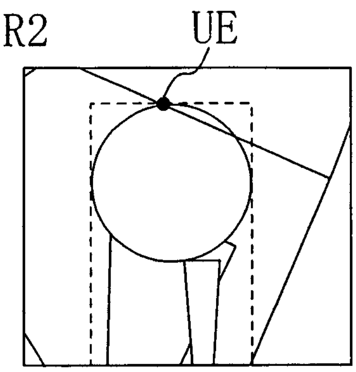

FIG. 5

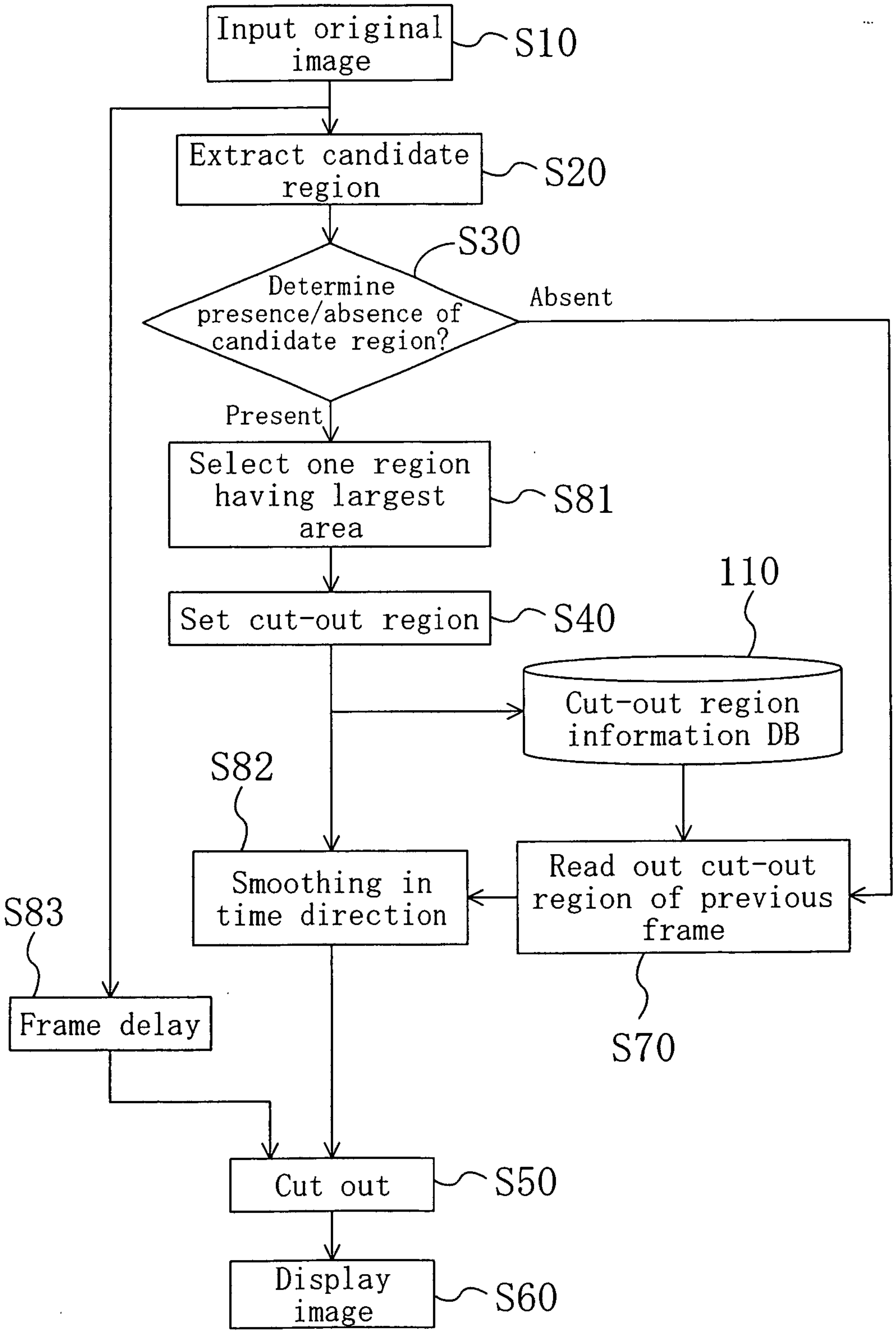
Input original image
S10
Extract candidate region
S20
S30
Determine presence/absence of candidate region?
Absent
Present
Select one region having largest area
S81
110
Set cut-out region
S40
Cut-out region information DB
S82
Smoothing in time direction
Read out cut-out region of previous frame
S83
Frame delay
S70
Cut out
S50
Display image
S60

FIG. 6

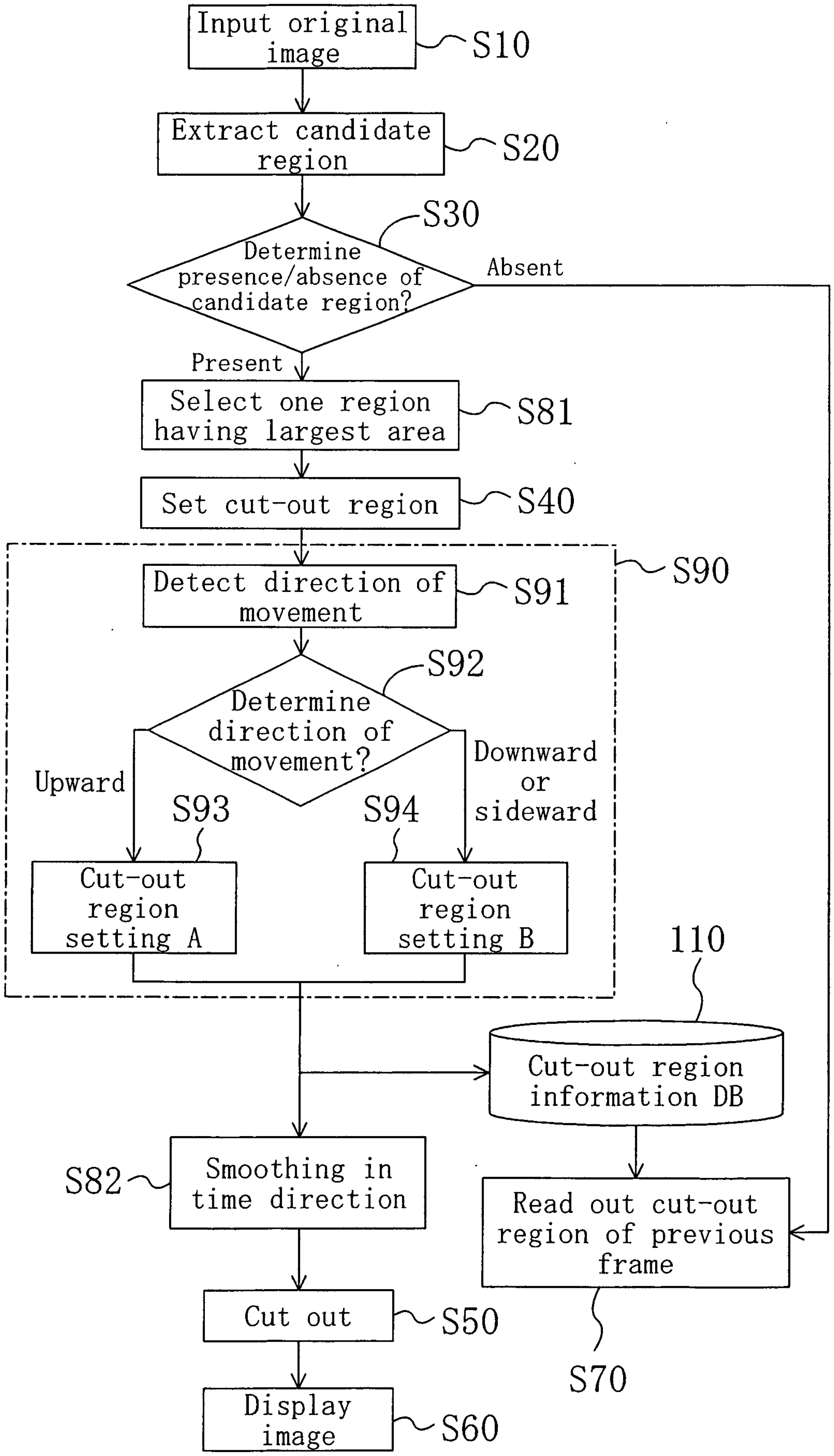
Input original image
S10
Extract candidate region
S20
S30
Determine presence/absence of candidate region?
Absent
Present
Select one region having largest area
S81
Set cut-out region
S40
S90
Detect direction of movement
S91
S92
Determine direction of movement?
Upward
Downward or sideward
S93
S94
Cut-out region setting A
Cut-out region setting B
110
Cut-out region information DB
Smoothing in time direction
S82
Read out cut-out region of previous frame
Cut out
S50
S70
Display image
S60

FIG. 7

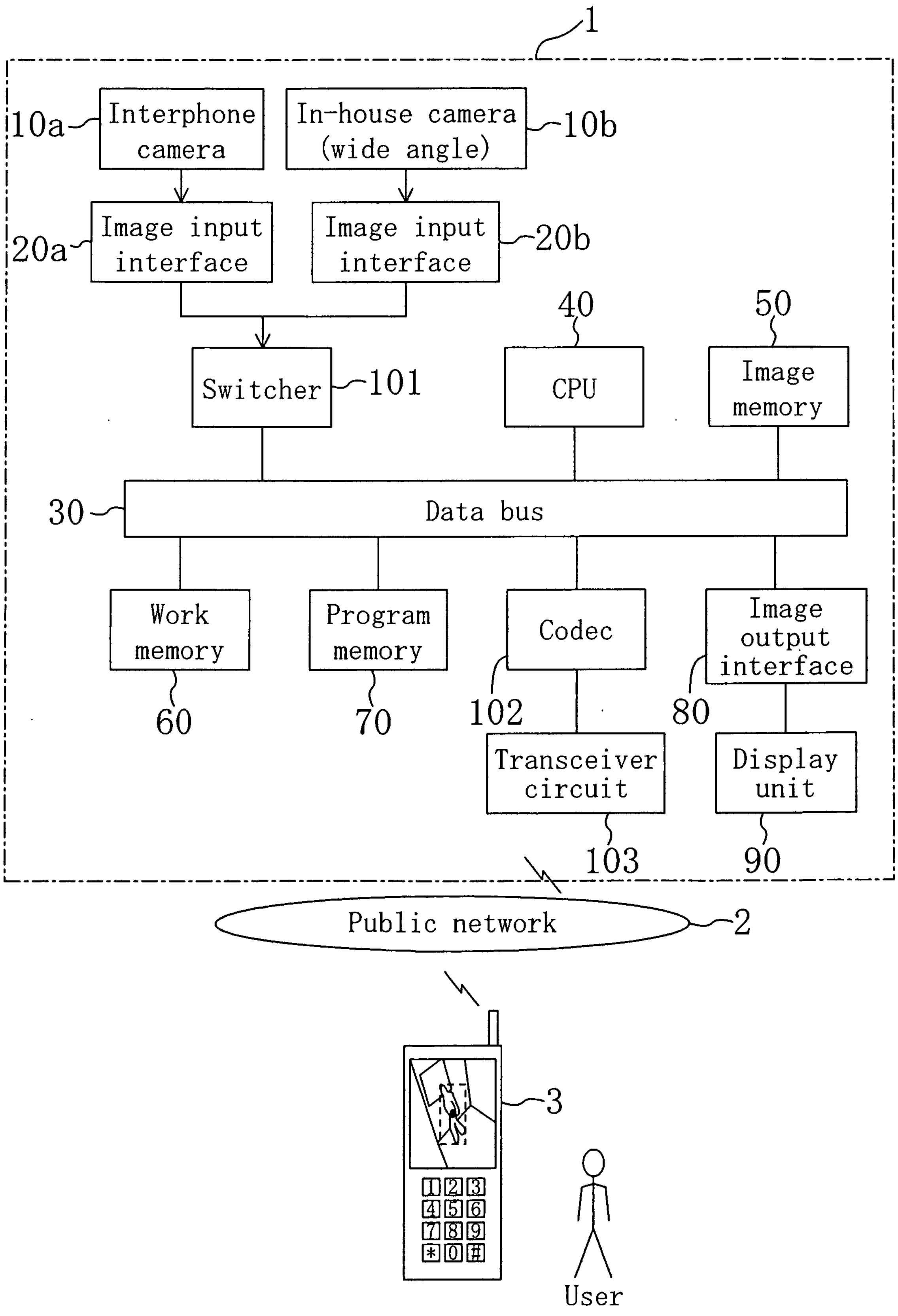
1
10a
Interphone camera
In-house camera (wide angle)
10b
20a
Image input interface
Image input interface
20b
40
50
Switcher
101
CPU
Image memory
30
Data bus
Work memory
Program memory
Codec
Image output interface
60
70
102
80
Transceiver circuit
Display unit
103
90
Public network
2
3
1 2 3
4 5 6
7 8 9
* 0 #
User

FIG. 8

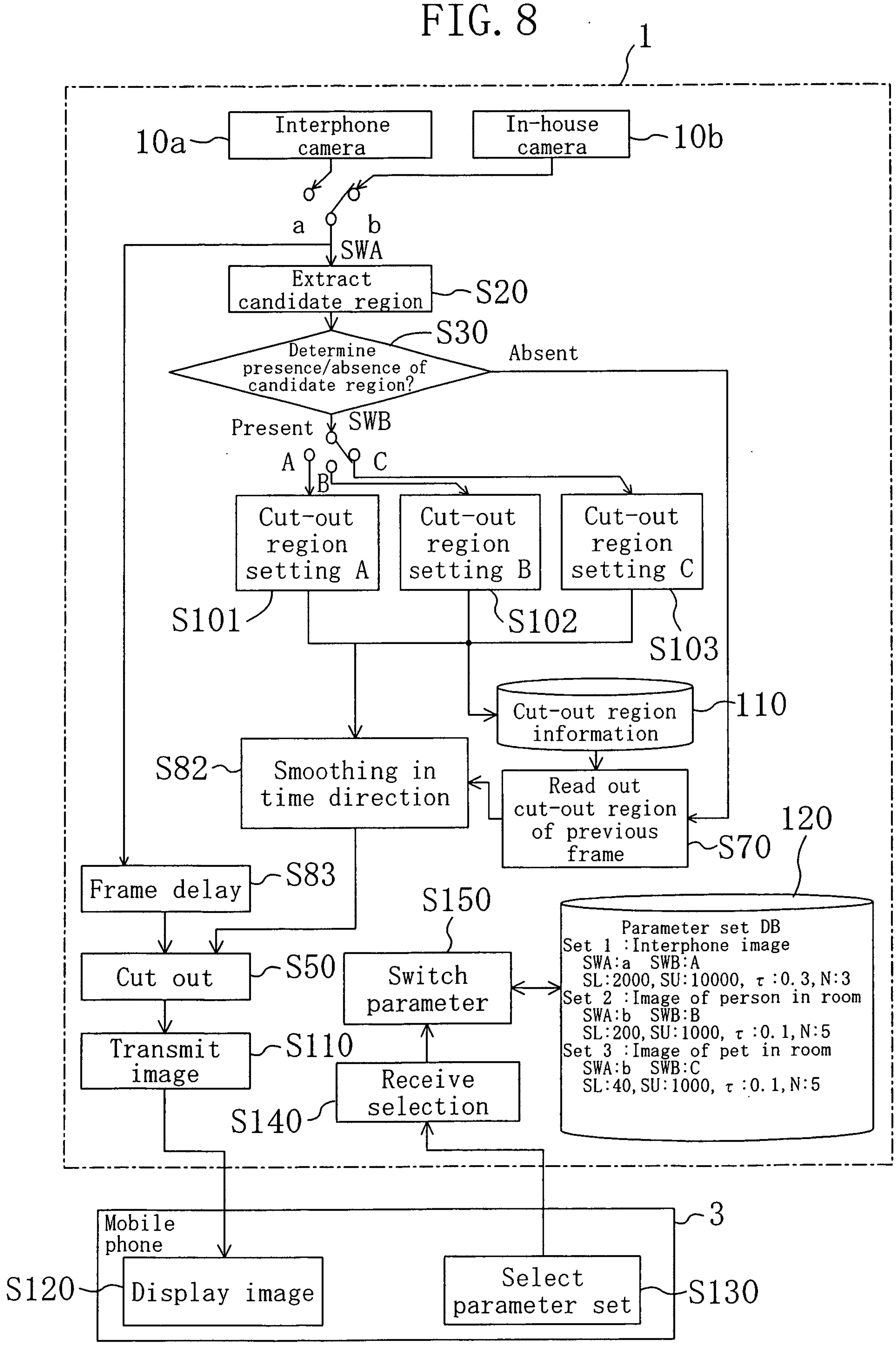
1
10a
Interphone camera
In-house camera
10b
a
b
SWA
Extract candidate region
S20
S30
Determine presence/absence of candidate region?
Absent
Present
SWB
A
B
C
Cut-out region setting A
Cut-out region setting B
Cut-out region setting C
S101
S102
S103
Cut-out region information
110
S82
Smoothing in time direction
Read out cut-out region of previous frame
S70
120
Frame delay
S83
S150
Parameter set DB
Set 1 :Interphone image
SWA:a SWB:A
SL:2000, SU:10000, τ :0. 3, N:3
Set 2 :Image of person in room
SWA:b SWB:B
SL:200, SU:1000, τ :0. 1, N:5
Set 3 :Image of pet in room
SWA:b SWB:C
SL:40, SU:1000, τ :0. 1, N:5
Cut out
S50
Switch parameter
Transmit image
S110
Receive selection
S140
Mobile phone
3
S120
Display image
Select parameter set
S130

FIG. 9

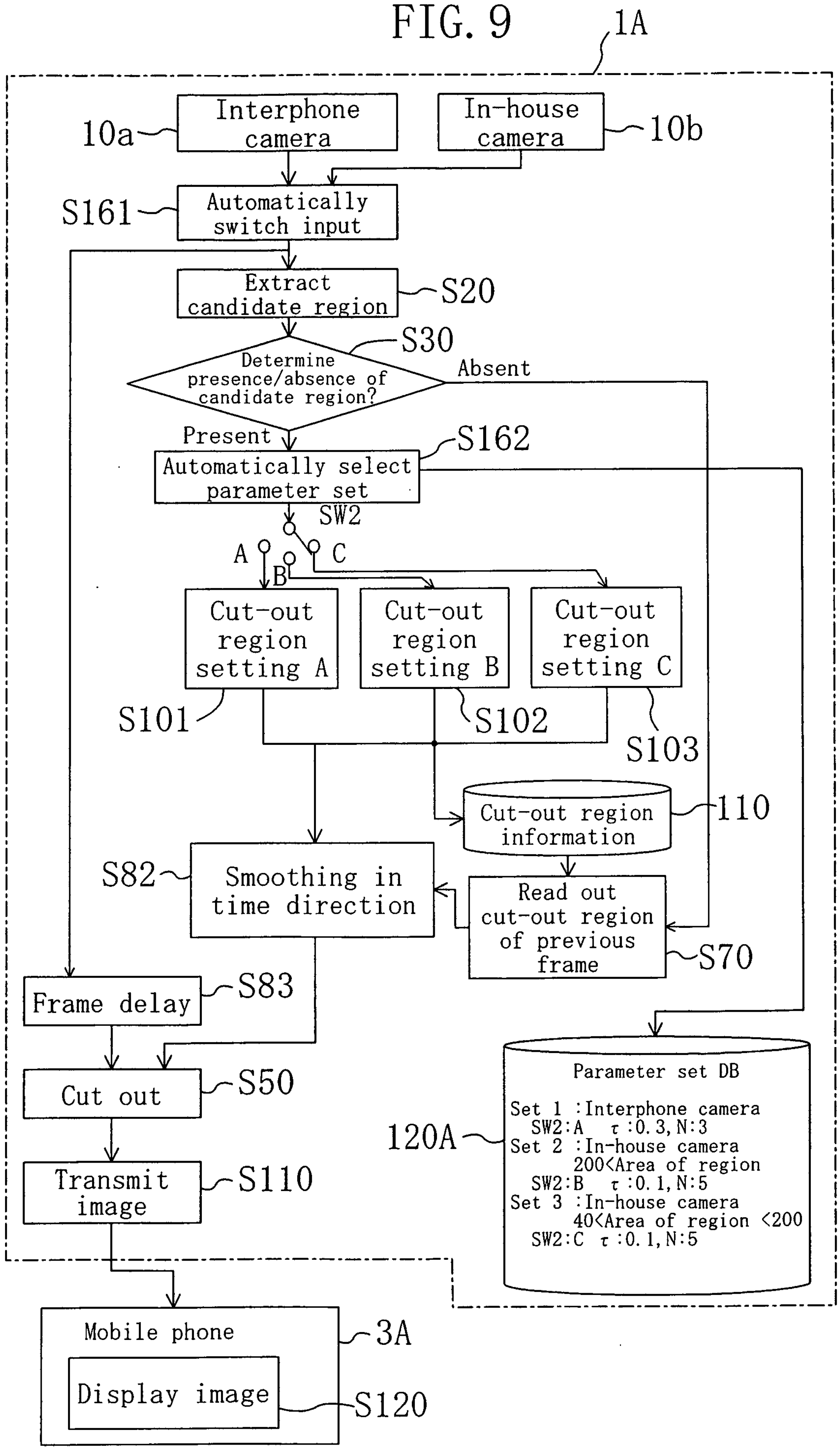
1A
Interphone camera
10a
In-house camera
10b
S161
Automatically switch input
Extract candidate region
S20
S30
Determine presence/absence of candidate region?
Absent
Present
S162
Automatically select parameter set
SW2
A
B
C
Cut-out region setting A
Cut-out region setting B
Cut-out region setting C
S101
S102
S103
Cut-out region information
110
S82
Smoothing in time direction
Read out cut-out region of previous frame
S70
Frame delay
S83
Cut out
S50
Transmit image
S110
Parameter set DB
Set 1 :Interphone camera
SW2:A τ:0.3,N:3
Set 2 :In-house camera
200<Area of region
SW2:B τ:0.1,N:5
Set 3 :In-house camera
40<Area of region <200
SW2:C τ:0.1,N:5
120A
Mobile phone
Display image
3A
S120

FIG. 10

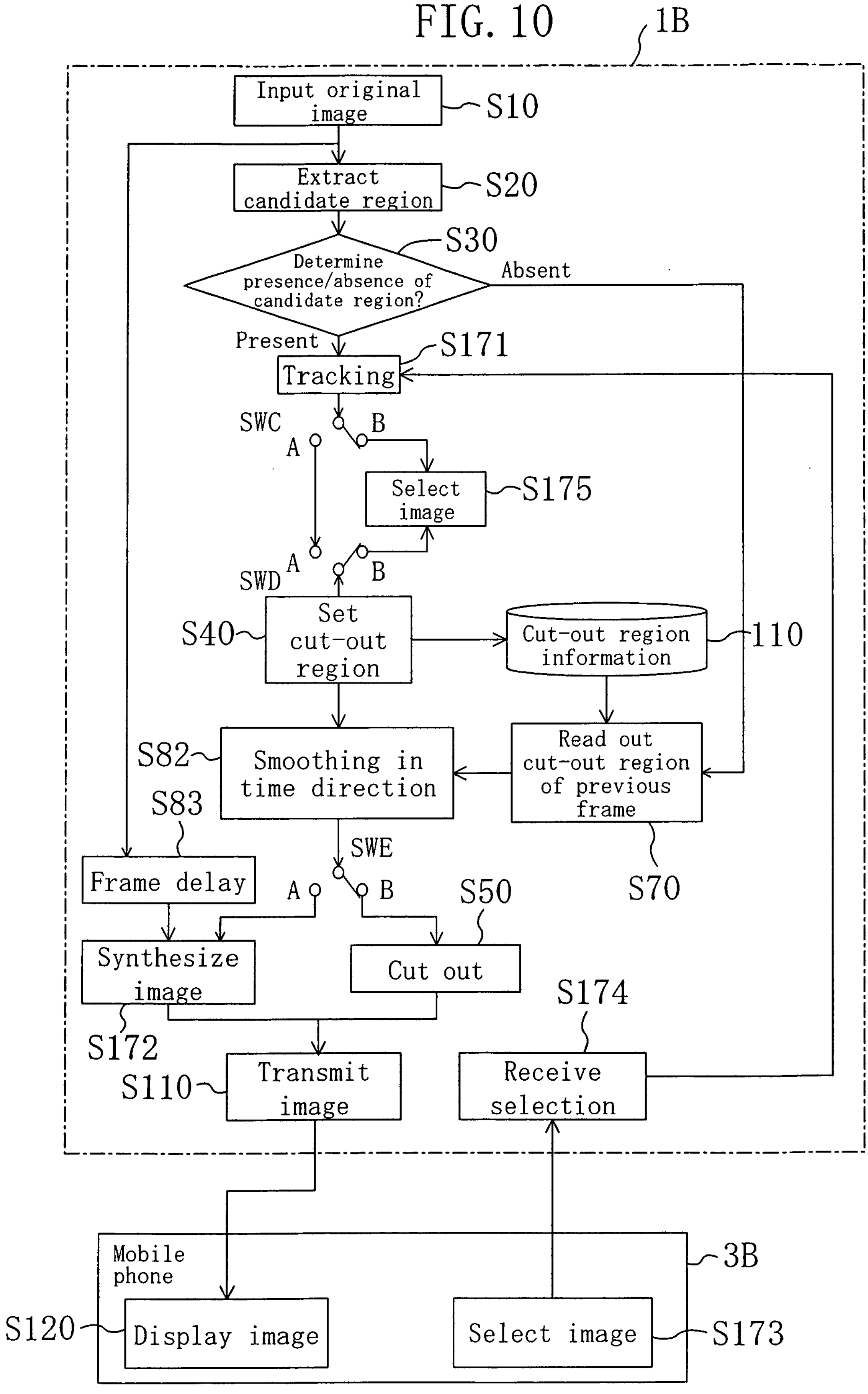
1B
Input original image
S10
Extract candidate region
S20
Determine presence/absence of candidate region?
S30
Absent
Present
Tracking
S171
SWC
A
B
Select image
S175
A
B
SWD
S40
Set cut-out region
Cut-out region information
110
S82
Smoothing in time direction
Read out cut-out region of previous frame
S83
S70
SWE
Frame delay
A
B
S50
Synthesize image
Cut out
S174
S172
S110
Transmit image
Receive selection
Mobile phone
3B
S120
Display image
Select image
S173

FIG. 11

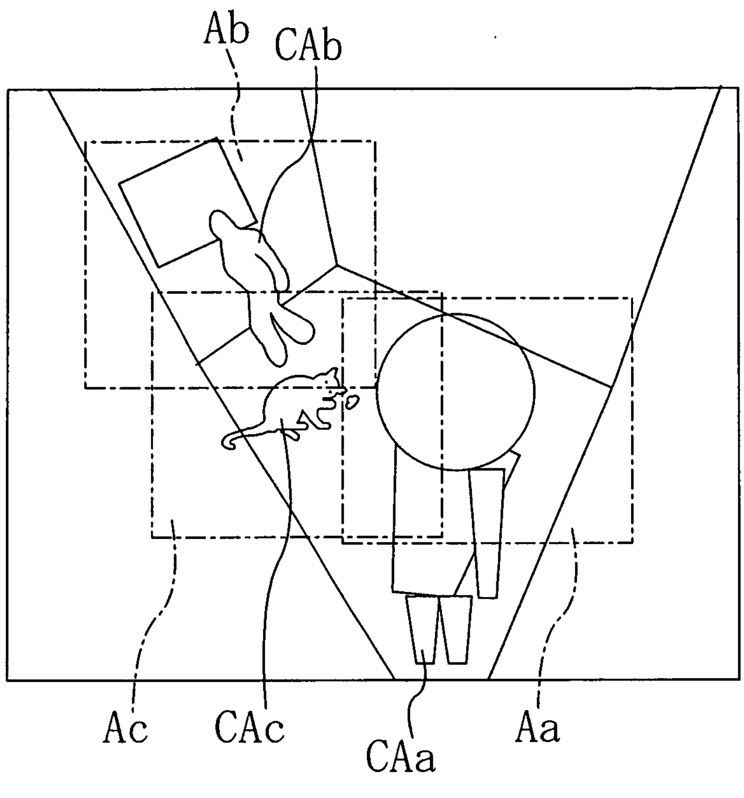

FIG. 12A

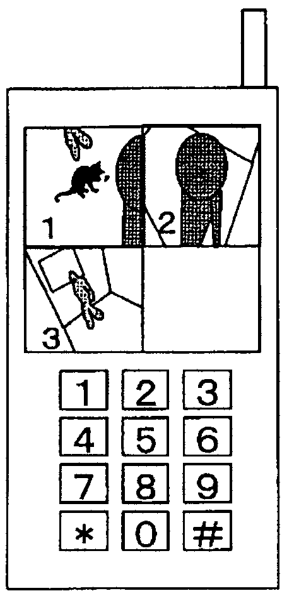


FIG. 12B

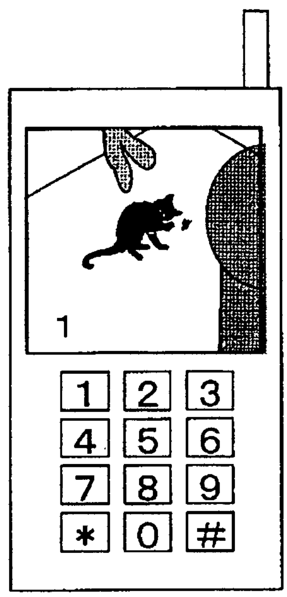

FIG. 13

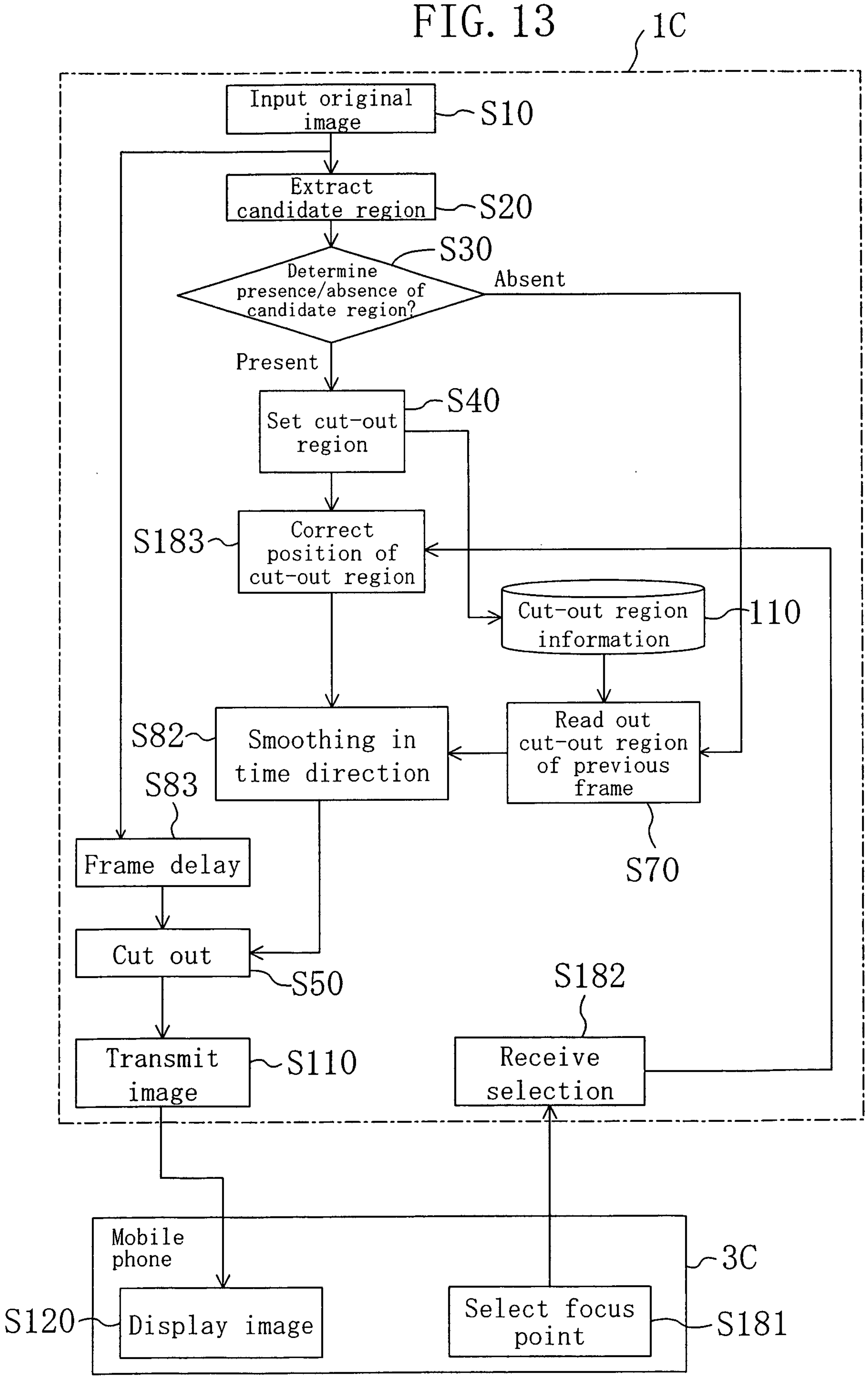
1C
Input original image
S10
Extract candidate region
S20
S30
Determine presence/absence of candidate region?
Absent
Present
Set cut-out region
S40
S183
Correct position of cut-out region
Cut-out region information
110
S82
Smoothing in time direction
Read out cut-out region of previous frame
S83
Frame delay
S70
Cut out
S50
S182
Transmit image
S110
Receive selection
Mobile phone
3C
S120
Display image
Select focus point
S181

FIG. 14

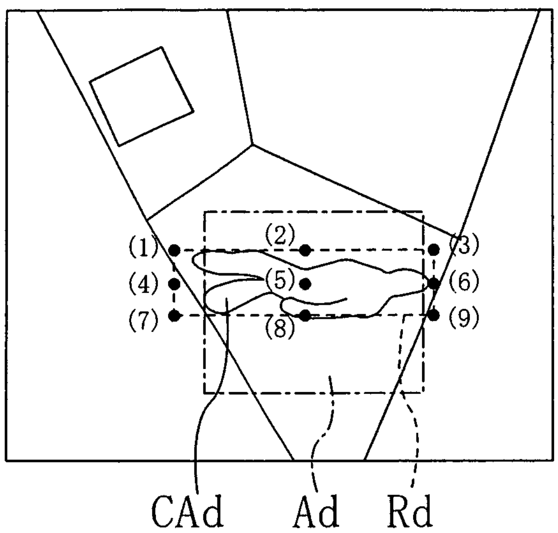

FIG. 15A

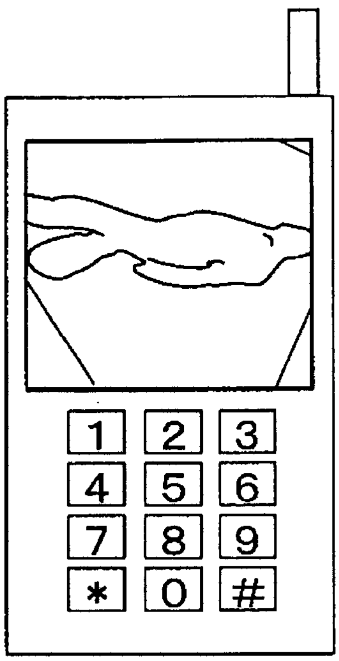

FIG. 15B

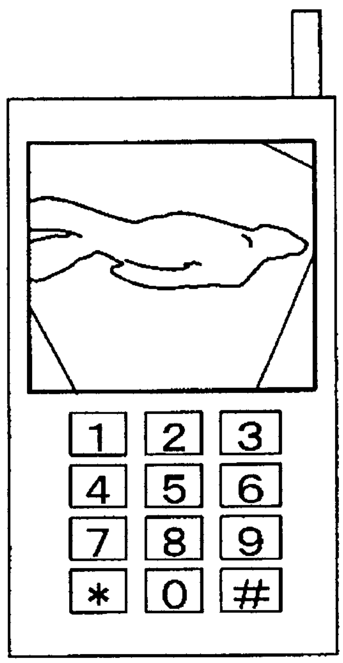

FIG. 16

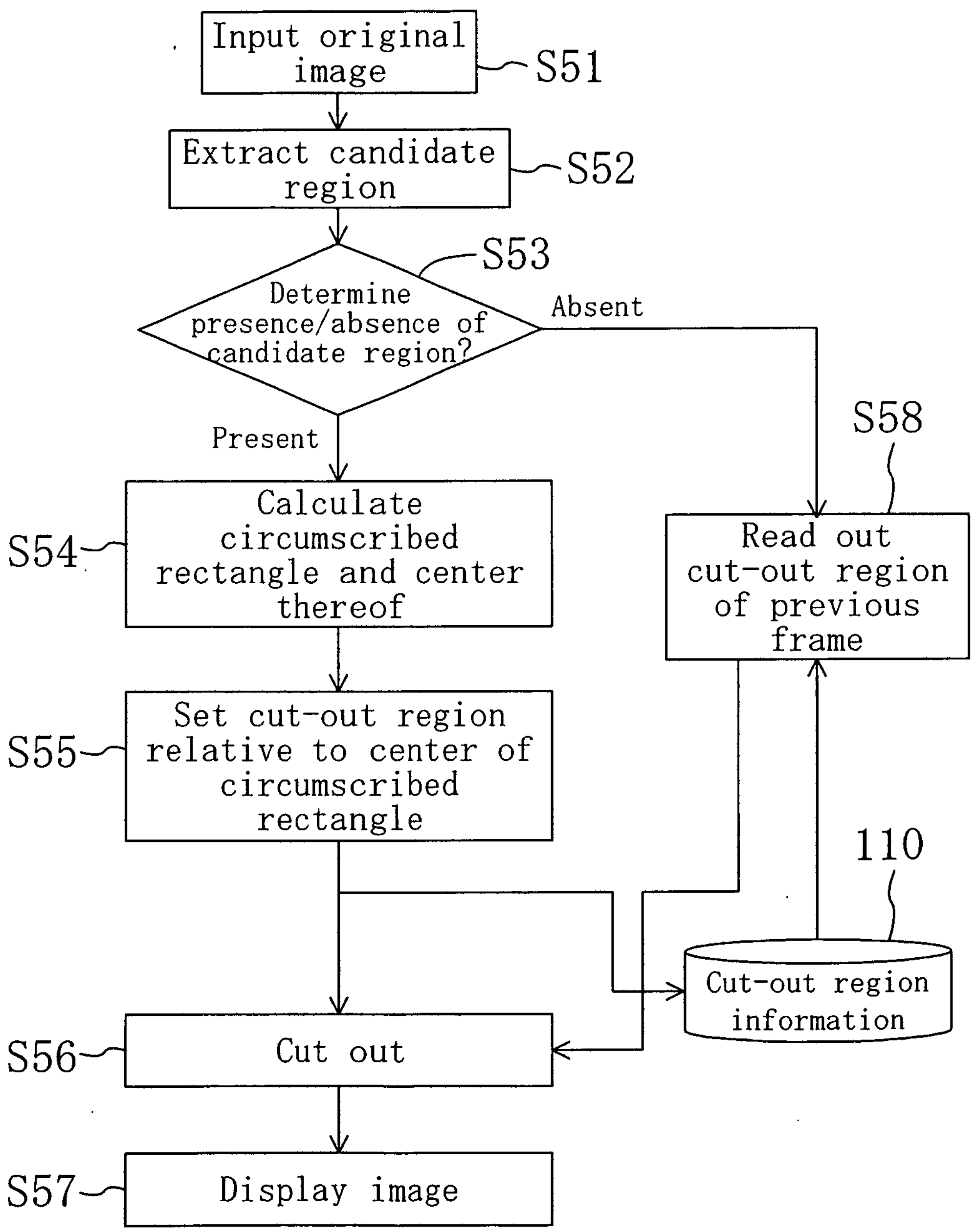
Input original image
S51
Extract candidate region
S52
S53
Determine presence/absence of candidate region?
Absent
Present
S58
Calculate circumscribed rectangle and center thereof
S54
Read out cut-out region of previous frame
Set cut-out region relative to center of circumscribed rectangle
S55
110
Cut-out region information
Cut out
S56
Display image
S57

FIG. 17A

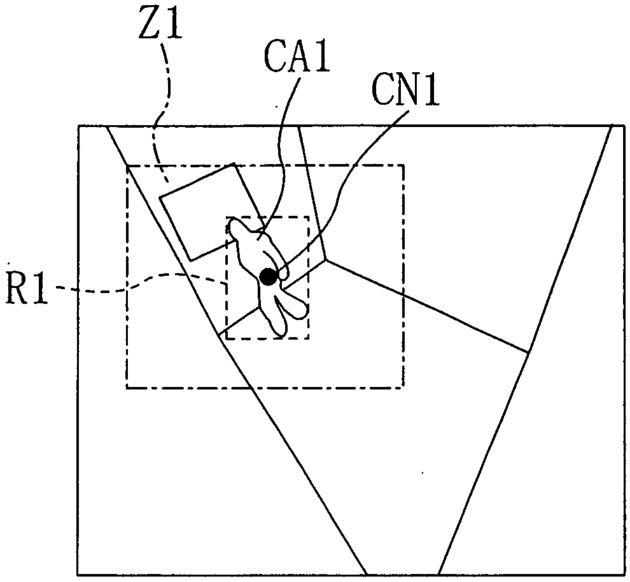


FIG. 17B

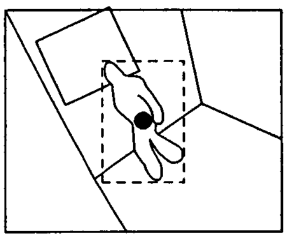

FIG. 18A

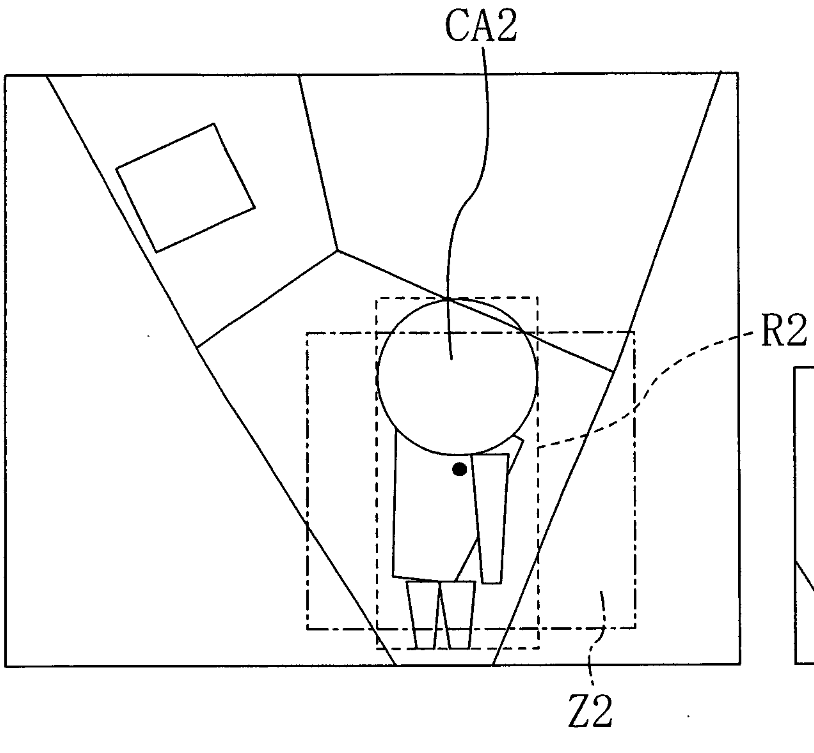


FIG. 18B